(19) **Europäisches Patentamt / European Patent Office / Office européen des brevets**

(11) **EP 1 236 593 B1**

(12) **EUROPÄISCHE PATENTSCHRIFT**

(45) Veröffentlichungstag und Bekanntmachung des Hinweises auf die Patenterteilung:
**17.12.2008 Patentblatt 2008/51**

(51) Int Cl.:
***B60H 1/00*** *(2006.01)*

(21) Anmeldenummer: **02000916.3**

(22) Anmeldetag: **16.01.2002**

(54) **Klimaanlage und Vorrichtung zur Regelung des thermischen Komforts in einem Kraftfahrzeug**

Air conditioner and device for regulating the thermal comfort in a vehicle

Climatiseur et appareil pour régler le confort thermique dans un véhicule

(84) Benannte Vertragsstaaten:
**DE ES FR GB IT**

(30) Priorität: **15.02.2001 DE 10106990**

(43) Veröffentlichungstag der Anmeldung:
**04.09.2002 Patentblatt 2002/36**

(73) Patentinhaber: **Behr GmbH & Co. KG**
**70469 Stuttgart (DE)**

(72) Erfinder:
- **Burk, Roland, Dipl.-Phys.**
  **70469 Stuttgart (DE)**
- **Geskes, Peter, Dr.**
  **70469 Stuttgart (DE)**

(74) Vertreter: **Grauel, Andreas**
**Behr GmbH & Co. KG**
**Intellectual Property, G-IP**
**Mauserstrasse 3**
**70469 Stuttgart (DE)**

(56) Entgegenhaltungen:
**WO-A-02/02361**     **DE-A1- 19 801 028**
**DE-A1- 19 954 000**     **GB-A- 2 344 647**
**US-A- 5 518 176**

- **PATENT ABSTRACTS OF JAPAN Bd. 013, Nr. 048 (M-793), 3. Februar 1989 (1989-02-03) & JP 63 255116 A (DIESEL KIKI CO LTD), 21. Oktober 1988 (1988-10-21)**

## Beschreibung

Die Erfindung betrifft eine Klimaanlage und eine Vorrichtung zur Regelung des thermischen Komforts in einem Kraftfahrzeug gemäß dem Oberbegriff des Anspruchs 1 sowie eine Klimaanlage mit einer solchen Vorrichtung.

Die Herstellung eines angenehmen thermischen Klimas in Fahrzeuginnenräumen ist aufgrund der durch Sonneneinstrahlung eingebrachten Wärmelast deutlich schwieriger als in größeren stationären Räumen mit relativ geringer volumenbezogener Wärmelast durch Sonneneinstrahlung. Gründe hierfür sind:

- Fahrzeuginnenräume sind relativ klein und enthalten ein geringes Luftvolumen;
- die solare Wärmelast, also die eingestrahlte Leistung, ist durch die großen und flach stehenden Scheiben sehr groß;
- die Insassen werden teilweise durch die direkte Sonneneinstrahlung in Abhängigkeit der Einstrahlrichtung und etwaiger vorhandener Abschattung lokal unterschiedlich aufgeheizt;
- die Luftausströmer befinden sich in nur geringem Abstand von den Insassen, wodurch große Temperaturunterschiede entstehen;
- die von der Sonne aufgeheizte Fahrzeugumschließungsfläche strahlt Wärme im langwelligen Infrarotbereich an die Fahrzeuginsassen ab. Diese aufgeheizten Einbauten kühlen sich deutlich langsamer ab, als die Innenraumluft. Die Folge ist ein Ungleichgewicht zwischen Luft- und Strahlungstemperatur.
- die manuelle Einstellung der Luftausströmer auf eine bestimmte Sonneneinstrahlung ist schwierig, da sich die Ausrichtung des Fahrzeugs zum Sonnenstand ständig ändert.

Die hohe Wärmelast des durch die dunklen, stark absorbierenden Oberflächen fast wie ein Sonnenkollektor wirkenden Fahrzeuginnenraumes erfordert zur Kompensation eine hohe Kälteleistung, die als Kaltluftstrom in das Fahrzeug eingeblasen wird. Durch den geringen Abstand zwischen Insassen und Luftausströmern können unangenehme Zugeffekte entstehen. Die für einen hohen Komfort erforderlichen geringen Temperaturunterschiede auf der Oberfläche der Fahrzeuginsassen, wie der Kleidung und der Haut, können dadurch kaum erzielt werden.

Im Winter führen kalte Türen und Fenster zu einem fehlenden Wohlbefinden im Fahrzeug, wobei von einer Seite einfallende Sonnenstrahlung dieses Wohlbefinden wieder herstellen kann. Nach längerer Aufwärmung des Fahrgastinnenraums kann die seitlich einfallende Sonnenstrahlung allerdings auch wieder als unangenehm empfunden werden. Herkömmliche Klimaanlagen reagieren nicht ausreichend auf die unterschiedlichen Zustände, die für den Fahrer u.U. ganz anders sein können, als für den Beifahrer.

Hinzu kommt noch, daß es in der kurzen zur Verfügung stehenden Zeit einer häufig relativ kurzen Autofahrt (ca. 10 Minuten) kaum möglich ist, einen angenehmen Beharrungszustand im Fahrzeuginnenraum zu erreichen. Sowohl das Fahrzeug selbst, als auch Fahrzeuginsassen sind dadurch ein Großteil der Zeit relativ weit entfernt von einem thermisch ausgeglichenen Zustand, in dem Behaglichkeit entstehen kann.

Ein großer Mangel heutiger Klimaanlagen, die mit einem fest an einer Stelle angeordneten Temperatursensor arbeiten, liegt darin, daß die Zeitdauer bis zum Erreichen eines Komfortzustandes, gemessen an den mittleren Fahrtzeiten, zu lange ist. Diese Sensoren sind in der Regel im Bedienelement der Klimaanlage angeordnet und es erfolgt eine Berechnung der Kopfraumtemperatur. Um den aufgeheizten Fahrzeuginnenraum in möglichst kurzer Zeit auf eine komfortable Temperatur zu kühlen, werden hohe Luftmengen mit sehr niederer Temperatur in den Fahrzeuginnenraum geblasen. Hierbei entstehen sehr große Temperaturdifferenzen auf der Oberfläche der Fahrzeuginsassen. Insbesondere werden die im Austrittskegel der Ausströmer liegenden Körperbereiche zu stark abgekühlt, während andere Körperpartien, die der vollen Sonneneinstrahlung ausgesetzt sind sehr stark aufgeheizt werden. Insbesondere dann, wenn die Insassen schon beim Einstieg leicht verschwitzt sind, können Zugeffekte sogar zu gesundheitlichen Beeinträchtigungen führen.

Im Falle eines beispielsweise im Winter stark abgekühlten Fahrzeugs wird sehr viel Warmluft in den Innenraum geblasen. Dabei können einzelne Bereiche zu stark aufgewärmt werden, wenn die Sonne lokal einen zusätzlichen Wärmeeintrag leistet.

Auch nach Erreichen des stationären Zustandes wird mit einer solchen Klimaanlage mit ausschließlicher Regelung der Lufttemperatur des Fahrzeuginnenraums, nicht der auf die Fahrzeuginsassen einwirkenden Wärmestrom, der von den aufgeheizten Oberflächen, wie Armaturentafel, Scheiben, Sitze, etc., des Innenraums ausgeht, berücksichtigt.

Auch ein zusätzlicher Solarsensor, wie sie heute schon zum Einsatz kommen, berücksichtigt nicht die zeitlich sehr unterschiedliche langwellige Infrarotstrahlung, die von den inneren Oberflächen und Einbauten ausgeht, sowie die Inhomogenitäten durch unterschiedliche Abschattungen und Luftausströmrichtungen der Düsen, die zu Zugeffekten führen können. Darüberhinaus mißt der Solarsensor nur die Störgröße (Sonne), nicht aber die Wirkung der Störgröße und der Umschließungsflächen auf die Insassen des Fahrzeugs.

Das beste Signal zur lokalen Messung und Charakterisierung eines Komfortzustandes liefert ein Oberflächentemperatur-Meßsensor (z.B. Thermopile-Sensor), der die Wirkung aller thermisch relevanten Größen berücksichtigt, also eine sogenannte Klima-Summengröße liefert. Der Einsatz eines solchen Sensors in der Regelung für eine Fahrzeugklimaanlage ist beispielsweise aus der EP 0 987 133 A2 bekannt.

Ferner beschreibt die GB 23 44 647 eine Fahrzeugklimatisierungseinrichtung nach dem Oberbegriff des Anspruchs 1, bei welcher entsprechende Einstellungen der Klimaanlage in Abhängigkeit von Messwerten mehrerer im Fahrzeug angeordneter Infrarotsensoren vorgenommen werden.

Ausgehend von diesem Stand der Technik ist es Aufgabe der Erfindung, eine verbesserte Klimaanlage bzw. eine Vorrichtung zur Regelung des thermischen Komforts bereitzustellen, mit der die vorgenannten Nachteile vermieden werden können und mit der möglichst alle für den Klimakomfort relevanten Einflußgrößen berücksichtigt werden können. Insbesondere sollen thermische Inhomogenitäten, die durch die zeitlich und örtlich ständig variierenden Strahlungsverteilungen auf der Oberfläche der Insassen, wie sie durch wechselnde Einstrahlrichtungen und Abschattungen der Sonne durch Fahrtrichtungsänderungen, Wolken, Baumreihen und Tunnelfahrten etc., entstehen können, erkannt und kompensiert werden. Auch sollen Zugeffekte, beispielsweise durch lokal starke Abkühlungen durch zu kalte Luft, vermieden werden.

Weitere Aufgabe der Erfindung ist es, die benötigte Kälteleistung zur Erzielung eines verbesserten Komforts zu minimieren und Kraftstoff einzusparen.

Diese Aufgabe wird gelöst durch eine Klimaanlage mit den Merkmalen des Anspruchs 1.

Vorteilhaft ist die Schaffung einzelner insassenbezogener Mikroklimazonen und die Regelung der Lufttemperatur und/oder der Luftmenge in jeder Kimazone gegebenenfalls getrennt.

Die Vorrichtung zur Regelung des thermischen Komforts weist zum einen wenigstens einen eine sich räumlich erstreckende Meßfläche erfassenden Temperatursensor und einen Ausströmer zur gerichteten Ausströmung von in einer Klimaanlage temperierter Luft in einen Ausströmbereich auf, wobei erfindungsgemäß die von dem Temperatursensor erfasste Meßfläche der von der durch die Ausrichtung des Ausströmers vorgegebenen Luftanströmfläche in etwa entspricht.

Dadurch ist gewährleistet, daß unabhängig von der Ausrichtung des Ausströmers immer die Temperatur der Oberfläche gemessen wird, die für das thermische Empfinden relevant ist und daher auch temperiert werden soll. Dadurch können die vorgenannten Nachteile vermieden und der Komfort und das Wohlfühlbefinden der Insassen erhöht werden.

Die vom Sensor erfaßte Oberflächentemperatur wird als resultierende Oberflächentemperatur bezeichnet und enthält alle komfortrelevanten Größen wie

- Lufttemperatur
- Konvektiver Wärmeübergang der angeblasenen Oberfläche
- Abkühlung feuchter Oberflächen durch Verdunstung
- Farbe
- Absorptionskoeffizient der Kleidung
- Strahlungstemperatur der Umschließungsfläche (langwellige IR-Strahlung),
- Sonneneinstrahlung (kurzwelliges Strahlungsspektrum),

so daß alle diese Größen berücksichtigt werden und eine korrekte Temperierung des erfassten Bereiches erfolgen kann.

Damit wird die Temperierung des erfassten Bereiches inklusive aller äußerer Einflüsse, wie Sonneneinstrahlung, Abschattungen etc. ermöglicht, und es wird stets die korrekte komfortrelevante Oberflächentemperatur erreicht.

Durch die direkte Messung der Oberflächentemperatur läßt sich eine direkte Klimatisierung der Insassen mit dezenten diffusen oder direkten eher strahlförmigen Luftströmungen durchführen, da eine Änderung der Bedingungen, wie beispielsweise wechselnde Sonneneinstrahlungen, ein Abdriften, wie Absinken oder Erhöhen, der Komfortoberflächentemperatur sofort erfaßt wird und regelungstechnisch eingegriffen werden kann. Diese direkte Klimatisierung kann sowohl strahlförmig also mit hoher Strömungsgeschwindigkeit erfolgen als auch dezent diffus. Mit diffuser Strömung ist gemeint, daß Luft aus den Ausblasdüsen großen Querschnitts mit geringen Geschwindigkeiten austritt oder aber die Luft in den Austrittsdüsen divergierend bzw. aufgefächert austritt und beim Einströmen in Fahrgastraum sehr viel seiner kinetischen Energie verliert.

Dabei wird die Fahrgastluft dezent verdrängt bzw. Luft der Fahrgastzelle in den diffusen Luftstrom eingemischt.

Vorzugsweise wird die direkte Klimatisierung über diffuse Ausströmer bewerkstelligt.

Darüberhinaus ist die gemessene Oberflächentemperatur mindestens einer Klimazone heranzuziehen, um die Art der Luftausströmung in zumindest einer Klimazone von strahlförmig auf diffus umzustellen. Im Bereich großen Diskomforts ist eine direkte strahlförmige Klimatisierung sinnvoll, während nahe am Komfortzustand eher eine diffuse Klimatisierung als angenehm empfunden wird.

Durch diese direkte Klimatisierung der Insassen, bei der die Insassen direkt mit der temperierten Luft abgeströmt werden, kann Heiz- bzw. Kühlleistung eingespart werden, da nicht der gesamte Fahrgastraum inklusive aller Einbaumassen auf eine komfortable Temperatur geheizt bzw. heruntergekühlt werden muß, sondern die Körperobertläche der Insassen durch direkte aber moderate Anblasung mit geeignet temperierter Luft so konditioniert wird, daß zumindest annähernd ein hoher Komfortzustand erzielt wird, indem der Insasse von der temperierten Luft umhüllt wird.

Ein weiterer Vorteil ist ebenfalls, daß durch die direkte Klimatisierung jeder Mikroklimazone die direkte Wirkung der ausgeblasenen Luft auf das gemessene Oberflächentemperatursignal schnell erfaßt wird. Damit können besonders schnell wechselnde Bedingungen in sehr kurzer Zeit ausgeregelt werden können.

Vorzugsweise liegen der Temperatursensor und der Luftausströmer sehr nahe beieinander oder bilden sogar eine bauliche Einheit. Die Erfassungsrichtung des Temperatursensors und die Ausströmrichtung des Ausströmers sind dann gleichzeitig verstellbar und immer exakt aufeinander abgestimmt.

In einer konstruktiv vorteilhaften Ausgestaltung der Erfindung weist der Ausströmer Luftleitelemente zur Strömungrichtungsgebung auf, wobei der die Oberflächentemperatur berührungslos messende Sensor an wenigstens einem der Luftleitelemente befestigt ist. Dadurch ist in einfachster Weise gewährleistet, daß dieser berührungslos messende Temperatursensor und der Ausströmer auf dieselbe Fläche ausgerichtet sind.

In Weiterbildung der Erfindung besteht der berührungslos messende Temperatursensor aus einem Thermopileelement.

Wenn der Luftstrom beispielsweise in etwa kegelförmig austritt und der Temperatursensor den Raumwinkel, der in etwa dem Öffnungswinkel des Luftaustrittskegels entspricht, erfasst, kann insbesondere der Ausströmer einfach aufgebaut sein, wobei der Öffnungswinkel des Sensors oder der von ihm direkt temperierbaren Fläche 30° bis 120°, bevorzugt etwa 60° beträgt, so daß auf eine kostenintensive Optik verzichtet werden kann und der Durchmesser des vom Sensor erfassten Bereichs etwa dem Durchmesser der belüfteten Fläche und gleich dem Abstand des angeströmten Objekts zum Ausströmer entspricht. In weiterer Ausgestaltung der Erfindung kann der vom Ausströmer beaufschlagte und vom Temperatursensor erfasste Raumwinkelbereich auch nicht rotationssymmetrisch sondern z. B. oval sein, um den gesamten zu temperierenden Oberflächenbereich eines Fahrzeuginsassen besser abzubilden.

Mittels Thermopilesensoren oder anderen ähnlich arbeitenden Sensoren lassen sich die Luftmengen und/oder die Lufttemperaturen an den einzelnen Ausblasdüsen dahingehend regeln, daß die erzielten Oberflächentemperaturen in den einzelnen Mikroklimazonen in einen komfortablen Bereich überführt werden können. Dies kann beispielsweise dadurch erfolgen, daß die Luftmenge und/oder Lufttemperatur an der Mitteldüse und an der Seitendüse im wesentlichen jedes Insassen oder im wesentlichen jeder Sitzposition in gleicher Weise geregelt wird oder aber Seiten- und Mitteldüsen jeder Sitzposition oder jedes Insassen unterschiedlich temperierte Luft und/oder unterschiedliche Luftmenge ausbläst, um der Richtung der Störung, wie beispielsweise einer Sonneneinstrahlung, gerecht zu werden und diese auszugleichen.

Vorteilhaft ist es, wen jedem Insassen oder jeder Sitzposition zumindest ein Sensor, wie Thermopilesensor, zugeordnet ist, der vorzugsweise in den Ausblasdüsen oder in der Nähe der Ausblasdüsen angeordnet ist. Er kann je nach Ausführungsbeispiel auch an anderer Stelle, wie in einer A-Säule, im Bedienelement, auf dem Armaturenbrett oder im Dachhimmel, plaziert werden.

Auch kann es vorteilhaft sein, wenn nicht jede Mikroklimazone von einem eigenen Sensor überwacht wird. Es kann auch eine Berechnung der Temperaturen in Mikroklimazonen mittels Temperatursensoren oder Thermoelementen, die anderen Klimazonen zugeordnet sind, erfolgen. Für die Fondbelüftung könnte vorzugsweise die Signale von Sensoren der vorderen Sitzpositionen oder Insassen verwendet werden.

Erfindungsgemäß könnten auch weitere Düsen in A- Säule, B-Säule oder C-Säule, Dachhimmel, Armaturenbrett sowie in den Türen zur direkten Temperierung der Mikroklimazonen herangezogen werden. Dabei müssen nicht alle Ausströmer auf die Insassen oder Sitzpositionen gerichtet sein. Vorzugsweise wird aber jede Sitzposition oder jeder Insasse zu zumindest von einem Ausströmer direkt mit Luft klimatisiert, die vorzugsweise mittels eines Sensors, eines Thermopilesensors, geregelt wird. Die direkte Klimatisierung der Mikroklimazonen strahlförmig, diffus oder mit aufgefächertem Luftstrom erfolgen. Vorzugsweise erfolgt die direkte Klimatisierung diffus, kann aber auch so gestaltet sein, daß bei großer Abweichung von der Soll-Oberflächentemperatur die Klimatisierung zunächst strahlförmig und dann bei Erreichen des Komfortzustands diffus erfolgt.

Das Sensorsignal, das ein Maß für die Temperatur des von dem Ausströmer angeblasenen Objektbereichs, vorzugsweise eines Teilbereichs eines Insassen darstellt, wird in Weiterbildung der Erfindung einer Regeleinheit zugeführt, die auf ein Steuerelement zur Variation der vom Ausströmer ausgeblasenen Luftmenge und/oder Lufttemperatur so einwirkt, daß die vom Ausströmer erreichten Objektoberflächenbereiche auf einem komfortablen Wert gehalten werden.

Je nach Kleidungsdicke variiert die komfortabel erachtete Oberflächentemperatur. Im Sommer bei warmen Temperaturen wird aufgrund der leichten Bekleidung eine Oberflächentemperatur im Bereich von ca. 26°C und ca. 31°C als angenehm empfunden, während im Winter durch eine dickere Bekleidung die komfortable Oberflächentemperatur geringer ist, wie zum Beispiel im Bereich von 18°C bis 26°C.

Zu kalte oder zu heiße Luftströme, die als unangenehm empfunden werden könnten, werden vermieden. Störgrößen durch sich u. U. schnell ändernde Strahlungsverhältnisse werden sofort kompensiert.

Damit ist der Vorrichtung eine gewisse "Eigenintelligenz gegeben, so daß entsprechend von einem Insassen vorgegebenen Temperaturvorgaben die Vorrichtung selbsttätig die gewünschte Temperatur am gewünschten Ort einstellt.

Das Steuerelement kann in einfacher Ausführung eine im Klimagerät oder in dem Ausströmer angeordnete Drosselklappe, mit der die Luftmenge regelbar ist, sein. In weiterer Ausgestaltung der Erfindung kann das Steuerelement ein oder mehrere Regelventile umfassen, mit dem beispielsweise der Durchfluss durch wenigstens einen in dem Ausströmer angeordneten Wärmetauscher regelbar ist. Dann wäre es möglich, die Luft erst in dem Ausströmer, entsprechend vorgegebenen Temperafureinstellungen und den Signalen des Temperatursensors zu temperieren.

Damit ist ein "intelligenter" Ausströmer geschaffen, dem lediglich vorgegeben wird, welche Temperatur in welchem Bereich erreicht werden soll und der die weitere Temperaturregelung unabhängig von weiteren äußeren Einflüssen selbsttätig durchführt.

Der Wärmetauscher könnte auch lediglich oder zusätzlich elektrische Heizelemente, wie PTC-Elemente oder andere resistive Heizelemente, aufweisen, wodurch Leitungen für ein Wärmeträgermedium in kostengünstiger Weise entfallen. Das Steuerelement wäre ein elektrischer Regler, mit dem die elektrische Leistung der Heizelemente regelbar ist.

In einer weiteren Ausführungsvariante könnte die richtige Lufttemperatur durch Mischung zweier unterschiedlich temperierter Luftströme direkt im Ausströmer oder in einem zentralen Klimagerät erfolgen.

In einer Ausgestaltung der Erfindung weist die Vorrichtung eine Erkennungsund Steuervorrichtung auf, mit der ein Temperaturgradient in dem erfassten Raumwinkelbereich erkennbar ist. Über einen Stellantrieb für den Ausströmer zur selbsttätigen Verstellung der Luftausströmrichtung in Richtung größter Regelabweichung kann die Ausströmrichtung nachgefahren werden und beispielsweise ein Teilbereich genauer mit der temperierten Luft angeströmt werden.

Diese Erkennungsvorrichtung kann darin bestehen, dass der die angeblasene Oberfläche berührungslos messende Temperatursensor in mindestens zwei Segmente unterteilt ist und durch Vergleich der beiden Signale einen Temperaturgradienten errechnet. Weiterhin kann diese Erkennungsvorrichtung darin bestehen, daß der Ausströmer zusammen mit dem berührungslos messenden Temperatursensor langsame leicht kreisende oder schwenkende Bewegungen ausführt, um den erreichbaren Oberflächenbereich quasi abzurastern und den Bereich der größten Regelabweichung zu finden.

Damit könnte beispielsweise der Einfluß vertikal und/oder horizontal variabler Sonnenstände kompensiert werden. Beispielsweise besteht bei sehr hohen Sonnenständen, z.B. mittags im Sommer, der durch die Sonneneinstrahlung bewirkte größte Kühlbedarf im Bereich des Unterbauchs und der Oberschenkel, während der Brust- und Kopfbereich meist im Schatten liegen. Die Erkennungs- und Steuervorrichtung würde die Ausblasrichtung durch Messung der Regelabweichung automatisch in diese Richtung ausrichten und dort mit gekühlter Luft die durch Strahlungsabsorption entstehende Wärme abführen. Bei flacheren Sonnenständen wandert die besonnte Zone immer weiter nach oben, was von der Erkennungs- und Steuervorrichtung erkannt wird und den Ausströmer nachführt.

Vorteilhafterweise kann die Erkennungs- und Steuervorrichtung auch die Leistung des Wärmetauschers steuern.

Die beschriebene Vorrichtung kann Teil einer Klimaanlage eines Kraftfahrzeugs sein. Dabei ist es vorteilhaft, wenn einem Fahrzeuginsassen wenigstens zwei Vorrichtungen zugeordnet sind, die in horizontaler Ebene links und rechts vor dem Insassen angeordnet sind, wodurch z.B. Inhomogenitäten der Temperaturverteilung auf der Oberfläche des jeweiligen Insassen, beispielsweise durch wechselnde Sonneneinstrahlung, verringerbar sind. Weiterhin könnte eine Vorrichtung auch dem meist im Schatten befindlichen Fußraumbereich zugeordnet sein, so daß die Vorrichtung, beispielsweise im Winter, die starke Wärmeabstrahlung an die sehr kalten Umschließungsflächen erkennt und kompensiert.

Insgesamt erfolgt mit der erfindungsgemäßen Vorrichtung ein schneller Ausgleich von örtlichen und zeitlichen Inhomogenitäten der resultierenden Oberflächentemperaturen. Durch den wesentlich direkteren und damit schnelleren Regelkreis von berührungsloser Messung einer von temperierter Luft angeblasenen Oberfläche kann sehr schnell auf wechselnde Besonnungen und Beschattungen reagiert werden. Dabei wird die Hauptstörgröße in idealer Weise kompensiert. Dadurch, daß nicht mehr der gesamte Innenraum inklusive aller Massen heruntergekühlt oder aufgeheizt werden muß, wird der Komfortzustand auch wesentlich schneller erreicht. Weiterhin ist die zur Erzielung eines gewissen Komfortzustandes der Fahrzeuginsassen benötigte Heiz- bzw. Kühlleistung geringer. Vor allem im Sommerfall kann dadurch der für die Klimatisierung benötigte Primärenergieverbrauch reduziert werden.

Durch die Verwendung der erfindungsgemäßen Vorrichtung ließe sich eine Standardisierung der Einzelmodule fahrzeugübergeifend realisieren, die sich nur durch z.B. aufklipsbare fahrzeugspezifische Designelemente unterscheiden. Das würde zu reduzierten Kosten führen.

Vorteilhafte Weiterbildungen sind in den Unteransprüchen wiedergegeben.

Im Folgenden wird die Erfindung anhand von Ausführungsbeispielen unter Bezugnahme auf die Zeichnung im Einzelnen erläutert. In der Zeichnung zeigen:

Fig. 1      eine erste Ausführungsform einer erfindungsgemäßen Vorrichtung zur Regelung des thermischen Komforts;

Fig. 2        eine Klimaanlage, bei der die erfindungsgemäße Vorrichtung aus Fig. 1 einsetzbar ist;

Fig. 3 u. 4        schematische Darstellungen der Wirkungsweisen von in einer Armaturentafel angeordneten, erfindungsgemäßen Vorrichtungen bei seitlichem Sonneneinfall;

Fig. 5        eine weitere Ausführungsform der erfindungsgemäßen Vorrichtung,

Fig. 6        eine schematische Darstellung und

Fig. 7        eine Darstellung der gemessenen Oberflächentemperatur als Funktion eines ermittelten Wohlbefindens.

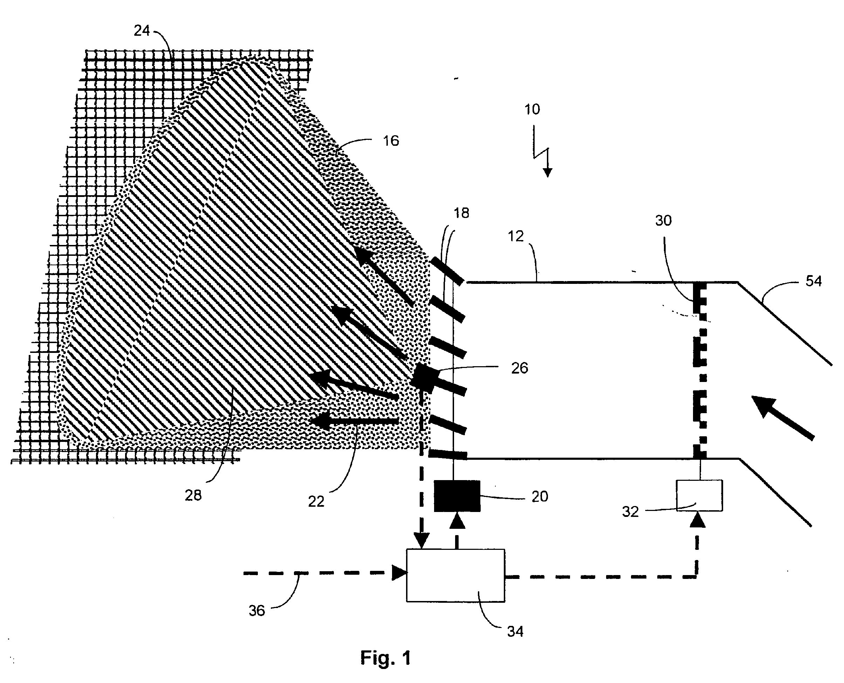

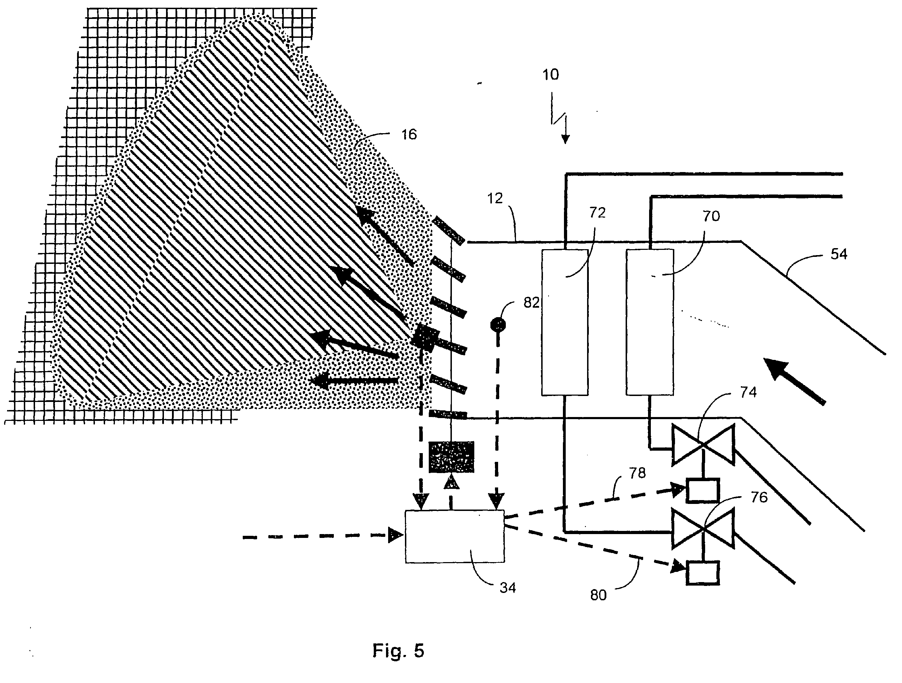

Eine erfindungsgemäße Vorrichtung 10 zur Regelung des thermischen Komforts in einem Kraftfahrzeug umfaßt einen Ausströmer 12 zur gerichteten Ausströmung von in einer Belüftungs-, Heizungs- oder Klimaanlage 14 konditionierten Luft in einen Ausströmbereich, der durch die gepunktete Fläche 16 in Fig. 1 dargestellt ist. Der Ausströmer 12 weist Luftleitelemente 18 auf, die über ein Stellelement 20 verstellbar sind, um den Ausströmbereich 16 und damit die Richtung der ausströmenden Luft, die mit Pfeilen 22 angedeutet ist, veränderbar festzulegen. Mit dem aus dem Ausströmer 12 austretenden Luftstrom, der eine bestimmte Temperatur hat, wird eine in den Fig. 1 und 5 mit einem Rechteck-Muster dargestellte Oberfläche 24 angeströmt, die beispielsweise ein bestimmter Körperbereich eines Fahrzeuginsassen sein kann.

Weiter weist die erfindungsgemäße Vorrichtung 10 einen Temperatursensor 26 auf, der berührungslos die Oberflächentemperatur der Oberfläche 24 messen kann, wobei der Raumwinkel $\alpha$, den der Temperatursensor 26 noch erfassen kann, derart bemessen ist, daß die von dem Temperatursensor 26 erfasste Meßfläche 28, die in den Fig. 1 und 5 schraffiert dargestellt ist, der von der durch die Ausrichtung der Luftleitelemente 18 des Ausströmers 12 vorgegebene Luftanströmfläche oder vom Ausströmer 12 direkt beaufschlagten Luftanströmfläche in etwa entspricht. Dieser Bereich muß nicht kreisförmig sein.

Der Temperatursensor besteht bevorzugt in einem Thermopile-Sensor, der ohne den Einsatz zusätzlicher Optik in etwa den vom Ausströmer beaufschlagten Raumwinkel entsprechend einem Öffnungswinkel zwischen 30° und 120° erfassen kann. Der Luftstrom 16 strömt in diesem Ausführungsbeispiel mit einem Öffnungswinkel, der diesem Raumwinkel von z. B. 60° entspricht, oder der Luftstrom ist hinsichtlich Richtung und Öffnungswinkel ausgerichtet, so daß die von dem Temperatursensor erfasste Meßfläche 28 der Luftanströmfläche entspricht.

Des weiteren weist der Ausströmer 12 ein Luftstromsteuerelement 30 auf, das beispielsweise als Drosselklappe ausgebildet sein kann und über ein Stellelement 32 betätigbar ist.

Der Temperatursensor 26, das Stellelement 20 und das Drosselklappenstellelement 32 sind über entsprechende, gestrichelt dargestellte Signal und Steuerleitungen mit einer Regeleinheit 34 verbunden. Über ein nicht näher dargestelltes Bediengerät der Klimaanlage 14 können über eine Signalleitung 36 Sollwerte für eine bestimmte Temperatur- und/oder Luftleitelementenstellung eingegeben werden, woraufhin die Regeleinheit 34 das Stellelement 20 und das Drosselklappenstellelement 32 entsprechend ansteuert, so daß die auf der Oberfläche 24 gewünschte Soll-Temperatur erreicht und gehalten wird. Dabei wird die Ist-Oberflächentemperatur von dem Temperatursensor 26 überwacht und die Drosselklappe 30 entsprechend angesteuert um die Soll-Oberflächentemperatur zu erreichen.

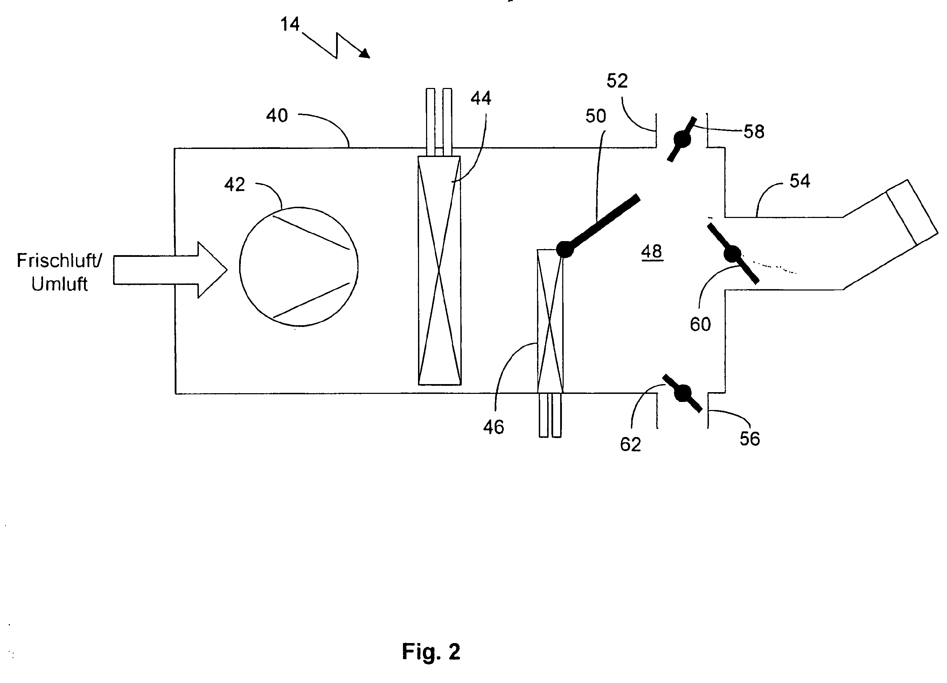

Die erfindungsgemäße Vorrichtung 10 ist Teil der in Fig. 2 schematisch dargestellten Klimaanlage 14, die ein Luftführungsgehäuse 40 aufweist, in dem ein Gebläse 42 angeordnet ist zur Förderung von Frisch- oder Umluft. Die Luft wird in einem Kühlwärmetauscher 44, beispielsweise einem Verdampfer eines nicht näher dargestellten Kältemittelkreislaufs, abgekühlt und kann als Kaltluft an einem Heizwärmetauscher 46 vorbeigeführt oder in dem Heizwärmetauscher 46 erwärmt werden und als Warmluft dem Luftmischraum 48 zugeführt werden, wobei das Verhältnis zwischen Kalt- und Warmluft über eine Mischklappe 50 einstellbar ist. Von dem Mischluftraum 48 zweigen ein Defrostluftkanal 52, ein Belüftungsluftkanal 54 und ein Fußraumluftkanal 56 ab. Optional können die Luftkanäle über Klappen 58, 60, 62 verschlossen werden. Über den Defrostluftkanal 52 kann Luft direkt der Windschutzscheibe zugeführt werden.

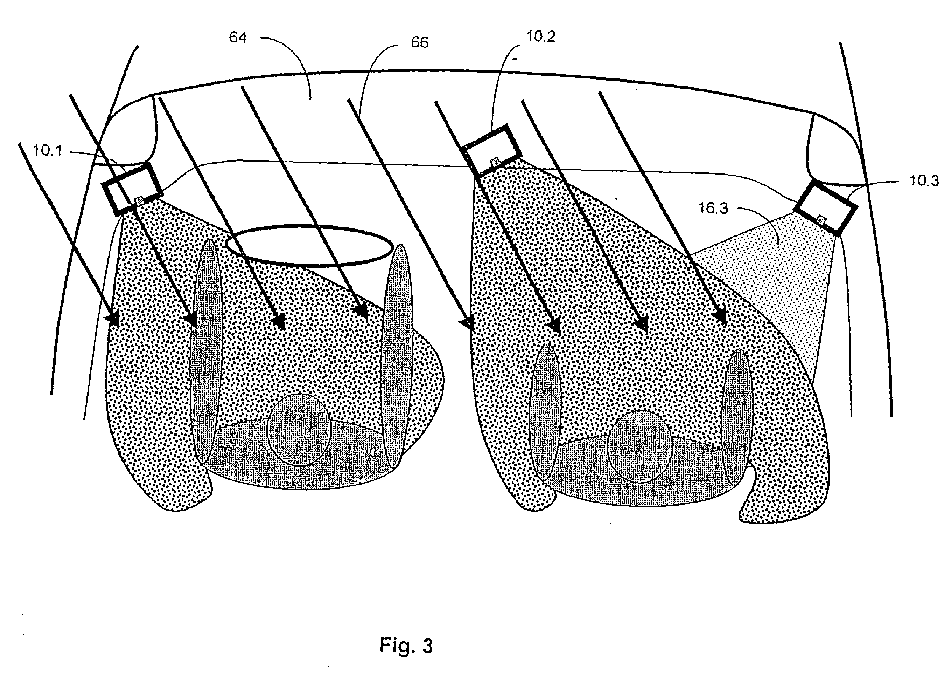

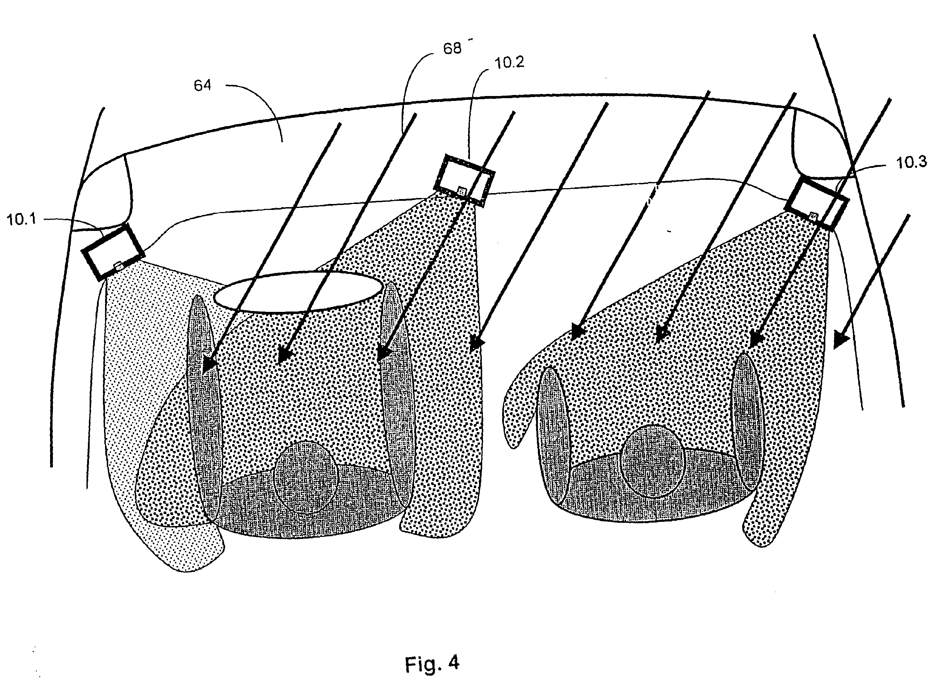

Über den Belüftungsluftkanal 54 wird die Luft zu wenigstens einer erfindungsgemäßen Vorrichtung 10 geführt, wobei in einer Armaturentafel 64, wie sie in den Fig. 3 und 4 dargestellt ist, beispielsweise drei der erfindungsgemäßen Vorrichtungen 10 angeordnet sein können, wobei jeweils eine an der linken 10.1 und rechten 10.3 Seite angeordnet ist und eine dritte 10.2 zentral in der Mitte angeordnet ist. Diese Anordnung hat den Vorteil, daß beispielsweise bei einer Sonneneinstrahlung von links, wie sie in Fig. 3 durch Pfeile 66 dargestellt ist, die links vom Fahrer angeordnete Vorrichtung 10.1 eine hohe Kühlleistung auf die linke Seite des Fahrers richten kann. Die in der Mitte angeordnete Vorrichtung 10.2 kann ebenfalls eine hohe Kühlleistung auf die linke Seite des Beifahrers richten und die auf der rechten Seite angeordnete Vorrichtung 10.3 kann mit verminderter jeweils bedarfsgerechter Kühlleistung die abgeschattete rechte Seite des Beifahrers kühlen. Die geringere Kühlleistung der Vorrichtung 10.3 ist in Fig. 3 durch kleinere Punkte in dem Ausströmbereich 16.3 dargestellt.

Bei Sonneneinfall von rechts, wie dies in Fig. 5 anhand der Pfeile 68 dargestellt ist, werden jetzt durch die Vorrichtungen 10.2 und 10.3 jeweils die rechte Seite von Fahrer und Beifahrer gekühlt, wobei die Vorrichtung 10.1 nun die linke Seite des Fahrers mit geringerer Leistung jeweils bedarfsgerecht kühlt.

Insgesamt ist damit für den Fahrer und Beifahrer bei wechselndem Sonneneinfall ein höherer Komfort gegeben.

In Weiterbildung der Erfindung kann die Regeleinheit eine Erkennungs- und Steuervorrichtung enthalten, mit der ein Temperaturgradient auf der zu temperierenden Oberfläche 24 in dem erfassten Raumwinkelbereich 28 erkennbar ist. Dazu könnten beispielsweise die Luftleitelemente 18 von dem Stellelement 20 derart kreisförmig bewegt werden, daß der mit den Luftleitelementen verbundene Temperatursensor 26 eine leicht kreisende oder schwenkende Bewegung ausführt und so ein Temperaturgradient auf der gemessenen Oberfläche 24 ermittelbar ist. Nach Ermittlung des Temperaturgradienten kann der Schwerpunkt der Kreisbewegung in Richtung des Gradienten verschoben werden, so daß damit das Zentrum des Luftausströmkegels beispielsweise in Richtung des größten Kühlbedarfs verschoben wird.

In einer weiteren Ausführungsform der erfindungsgemäßen Vorrichtung 10, sind in dem Ausströmer 12, wie in Fig. 5 dargestellt, wenigstens ein, bevorzugt zwei weitere, kleinere Wärmetauscher angeordnet, wobei ein erster Wärmetauscher 70 ein Kühlwärmetauscher und ein zweiter Wärmetauscher 72 ein Heizwärmetauscher sein kann. Über ein Regelventil 74 kann der Wärmeträgermediumdurchfluß durch den Kühlwärmetauscher 70 geregelt werden und entsprechend kann mit einem Regelventil 76 der Durchfluß durch den Heizwärmetauscher 72 geregelt werden. Die Regelventile 74 und 76 sind über Signalleitungen 78 und 80 mit der Regeleinheit 34 verbunden, so daß über die Regeleinheit 34 die. Temperatur der austretenden Luft in den Ausströmbereich 16 durch die Regeleinheit 34 einstellbar ist. Optional kann die Lufttemperatur im Ausströmer 12 zusätzlich über einen Temperatursensor 82 gemessen und kontrolliert werden.

Bei Einsatz einer derartigen erfindungsgemäßen Vorrichtung 10 sind prinzipiell die Heiz- und Kühlwärmetauscher 44 und 46 in dem Luftführungsgehäuse 40 nicht mehr notwendig, da die Temperierung der Luft am Ende der entsprechenden Luftkanäle jeweils in den einzelnen Ausströmern 12 vorgenommen wird. Dadurch ergibt sich eine erhebliche Bauraumgewinnung im Bereich der zentralen Klimaanlage 14.

Die Wärmeträgermediumleitungen für den Heizwärmetauscher 42 könnten eingespart werden, wenn dieser Heizwärmetauscher 42 elektrische Heizelemente, wie beispielsweise PTC-Elemente, enthält. Das Regelventil 76 würde dann durch einen elektrischen Leistungsregler ersetzt. Die dadurch erhöhten Leistungsanforderungen an das Fahrzeug-Bordnetz sind problemlos realisierbar, wenn in zukünftigen Fahrzeuge ein 42 Volt Bordnetz realisiert wird.

In einer weiteren nicht dargestellten Ausführungsform der erfindungsgemäßen Vorrichtung 10 ist in dem Ausströmer 12 lediglich ein Heizwärmetauscher vorgesehen sein, so daß in der Klimaanlage 14 die Luft über den Kühlwärmetauscher 44 nur abgekühlt wird und bedarfsweise in jedem einzelnen Ausströmer 12 auf die entsprechende gewünschte Temperatur wieder aufgeheizt wird. Damit ist in einfacher Weise ein dezentrales Klimatisierungskonzept geschaffen, bei dem den einzelnene Ausströmern zugeordnete Fahrzeginnenraumbereiche unterschiedlich temperierbar sind, wodurch der Komfort für die Insassen weiter erhöht ist, denn jeder Insasse kann seine individuelle Temperatur einstellen.

In einer weiteren nicht dargestellten Ausführungsform wird der klimatisierten Luft in der Austrittsdüse oder im Klimagerät untemperierte Luft beigemischt, um für jede Austrittsdüse eine eigene Temperatur einzustellen. Die Bereitstellung der untemperierten Luft könnte beispielsweise über einen eigenen Luftkanal erfolgen, der zu jeder Ausblasdüse führt und dort über eine Mischklappe der temperierten Luft zugemischt wird. Die Zumischung der untemperierten Luft kann aber auch über ein eigenes kleines Gebläse in den Ausströmern, wodurch Innenraumluft mit der von der Klimaanlage im Luftkanal bereitgestellten temperierten Luft in den Ausströmern vermischt wird und damit die von der Regeleinheit vorgegebene Lufttemperatur erreicht wird, erfolgen.

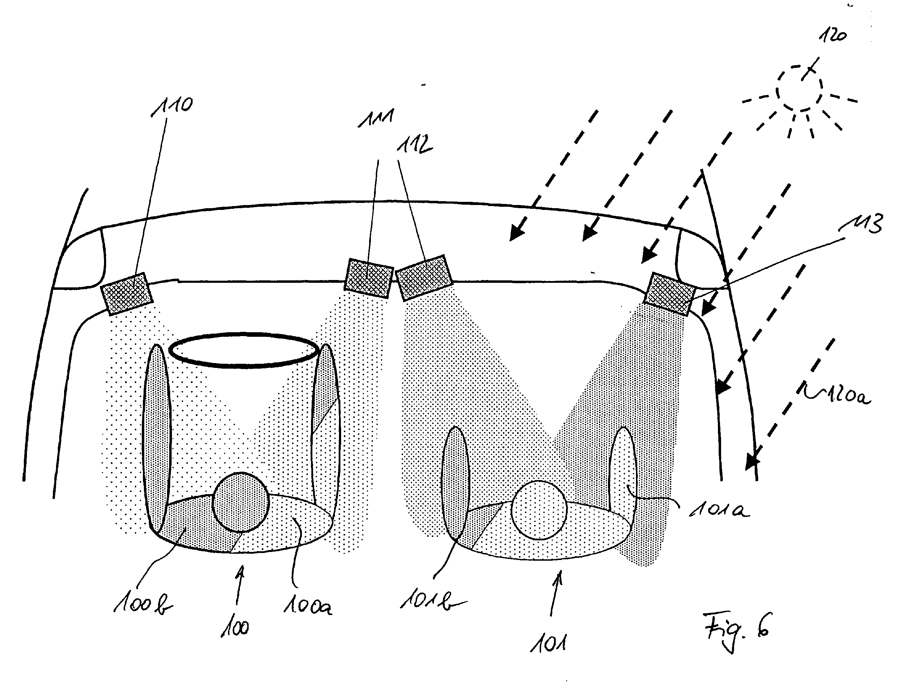

Die Figur 6 zeigt eine schematische Darstellung von zwei Personen 100 und 101 in einem Kraftfahrzeug. Vor den Personen sind Düsen 110, 111, 112 und 113 angeordnet, aus welchen Luftströme ausströmen. Die Luftströme werden dabei gezielt in Richtung auf die Insassen gelenkt.

Die Sonne 120 stellt eine Einfluß oder Störquelle dar und verursacht aufgrund der seitlichen Strahlung 120a eine richtungsabhängig unterschiedliche Strahlung, die zu unterschiedlichen Temperierungen der Insassen führt. Der Insasse 101 weist durch die Sonneneinstrahlung einen verstärkten Bereich 101a auf, der eine erhöhte Oberflächentemperatur aufweist. Der Bereich101b ist durch Abschattungen nicht so stark erwärmt. Vergleichbar ist es mit den Bereichen 100a und 100b des zweiten Insassen 100.

Durch die gezielte Ausströmung von unterschiedlich warmer Luft kann dieser inhomogenen Temperaturverteilung entgegen gewirkt werden. Die Ausströmer 110 bis 113 können gezielt unterschiedlich kalte Luft ausströmen lassen, so daß eine direkte Kühlung effektiv erfolgen kann. Aus Ausströmer 113 strömt relativ kalte Luft im Vergleich zu Ausströmer 110, wobei die Ausströmer 111 und 112 vorteilhaft mit ihren Ausströmtemperaturen dazwischen liegen. Auch kann die Luftmenge, die aus den jeweiligen Ausströmern ausströmt unterschiedliche groß sein, so daß aus den Ausströmern mit hohem Kühlbedarf besonders viel Luft ausströmt.

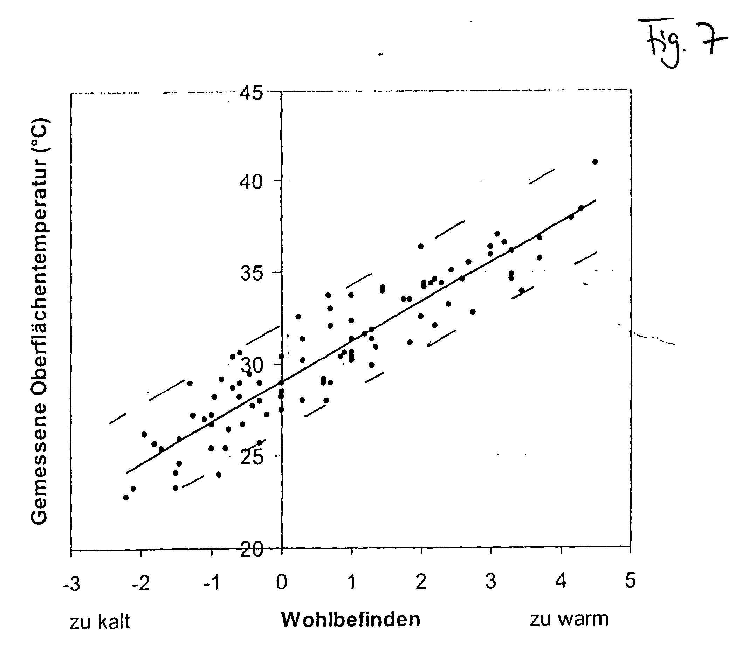

Die Figur 7 zeigt eine Darstellung einer gemessenen Oberflächentemperatur von Testpersonen an verschiedenen Körperstellen als Funktion des jeweiligen Wohlbefindens von den jeweiligen Testpersonen. Dabei sind die jeweiligen Messungen bei einer sommerlichen Bekleidung durchgeführt worden. Gleichzeitig mit der Meßwertaufnahme der Oberflächentemperatur an der Kleidung oder an dem Körper wurde von den Versuchspersonen ein Wohlfühlindikator im Bereich von -3 für zu kalt bis +5 für zu warm abgefragt. Die verschiedenen Personen und die verschiedenen Körperstellen bzw. Bekleidungspositionen erzeugen dabei in dieser Betrachtung eine Streuung gemäß Figur 7. Die durchgezogene Linie stellt dabei einen Mittelwert bzw. einen gemittelten Verlauf dar, wonach bei einer Oberflächentemperatur von ca. 28 °C bis 29 °C ein mittleres Wohlbefinden vorhanden ist. Diese Temperatur variiert jedoch bei verschiedenen Personen im Bereich von ca. 26 °C bis ca. 33 °C gemäß der unterbrochenen Linien.

Für eine andere Bekleidungssituation, also bei wärmerer Bekleidung, verschiebt sich die Kurve bzw. verschieben sich die Meßpunkte zu tieferen Temperaturen.

Die Anpassung der Wohlfühltemperatur kann beispielsweise durch zumindest ein Stellglied oder mehrere Stellglieder erfolgen, mittels welchem die anzupassende Oberflächentemperatur an das Wohlbefinden aufgrund der Bekleidungssituation einstellbar ist. Ein solches Stellglied kann beispielsweise ein Regler oder ein andere Einstellmöglichkeit sein, die von den Insassen einstellbar ist.

**Patentansprüche**

1. Klimaanlage mit einer Vorrichtung zur Regelung des thermischen Komforts in einer oder mehreren Klimazonen eines Kraftfahrzeugs mit wenigstens einem Temperatursensor zur berührungslosen Erfassung einer Oberflächentemperatur in einer Klimazone und einem Ausströmer zur gerichteten strahlförmigen und/oder diffusen Ausströmung von Luft in diese Klimazone,
   wobei die von dem Temperatursensor erfasste Meßfläche der von der durch die Ausrichtung des Ausströmers vorgegebenen Luftanströmfläche in etwa entspricht,
   **dadurch gekennzeichnet, dass** im Betrieb die Luftausströmung des Ausströmers in Abhängigkeit vom Grad des Diskomforts/Komforts in der Klimazone, der über zumindest ein Oberflächentemperatursignal des Temperatursensors erfasst wird, derart verändert wird, dass bei großem Diskomfort eine strahlförmige Luftausströmung erfolgt, während nahe am Komfortzustand eine diffuse Luftausströmung erfolgt.

2. Klimaanlage nach Anspruch 1, **dadurch gekennzeichnet, dass** der Temperatursensor ein auf Strahlung, wie Infrarotstrahlung, ansprechender Sensor ist.

3. Klimaanlage nach Anspruch 2, **dadurch gekennzeichnet, dass** der Temperatursensor (26) ein Thermopile-Sensor ist.

4. Klimaanlage nach einem der vorhergehenden Ansprüche, **dadurch gekennzeichnet, dass** der Temperatursensor (26) und der Ausströmer (12) eine bauliche Einheit bildern.

5. Klimaanlage nach Anspruch 4, **dadurch gekennzeichnet, dass** der Ausströmer (12) Luftleitelemente (18) zur Strömungrichtungsgebung (22) aufweist und der Temperatursensor (26) an wenigstens einem der Luftleitelemente (18) befestigt ist.

6. Klimaanlage nach einem der vorhergehenden Ansprüche, **dadurch gekennzeichnet, dass** der Ausströmer (12) wenigstens einen Wärmetauscher (70, 72) zur Temperierung der Luft enthält.

7. Klimaanlage nach Anspruch 6, **dadurch gekennzeichnet, dass** der Wärmetauscher elektrische Heizelemente, wie PTC-Elemente, enthält.

8. Klimaanlage nach einem der vorhergehenden Ansprüche, **dadurch gekennzeichnet, dass** der aus dem Ausströmer austretende Luftstrom kegelförmig mit rundem, ovalem oder anderem Austrittsraumwinkel ist und der Temperatursensor ungefähr den selben Raumwinkel, der in etwa dem Öffnungswinkel des Luftaustrittskegels entspricht, erfasst oder im wesentlichen den Flächenbereich erfasst, der von der austretenden Luft direkt temperiert wird.

9. Klimaanlage nach Anspruch 8, **dadurch gekennzeichnet, dass** der Öffnungswinkel des Temperatursensors im wesentlichen in einem Bereich von ca. 30° bis ca. 120° liegt.

10. Klimaanlage nach Anspruch 9, **dadurch gekennzeichnet, dass** der Öffnungswinkel 45° bis 60° beträgt.

11. Klimaanlage nach einem der Ansprüche 8 bis 10, **gekennzeichnet durch** eine Erkennungs- und Steuervorrichtung, mit der ein Temperaturgradient in dem erfassten Raumwinkelbereich erkennbar ist, und mit einem Stellantrieb für den Ausströmer zur selbsttätigen Verstellung der Luftausströmrichtung in Richtung größter Regelabweichung.

**12.** Klimaanlage nach Anspruch 11, **dadurch gekennzeichnet, dass** der Temperatursensor in zwei oder mehr verschiedene Sektoren mit jeweils eigenem Sensorelement unterteilt ist, um mindestens in einer Richtung einen Temperaturgradienten bestimmen zu können.

**13.** Klimaanlage nach Anspruch 11 oder 12 in Kombination mit Anspruch 6 oder 7, **dadurch gekennzeichnet, daß** die Erkennungs- und Steuervorrichtung auch die Leistung des Wärmetauschers steuert.

**14.** Klimaanlage nach einem der vorhergehenden Ansprüche, **dadurch gekennzeichnet**, einer oder mehreren Klimazonen jeweils zumindest ein Ausströmer zugeordnet ist.

**15.** Klimaanlage nach Anspruch 14, **dadurch gekennzeichnet, dass** jede Klimazone direkt einzeln mit unterschiedlichen Luftmengen und/oder Lufttemperaturen anströmbar ist.

**16.** Klimaanlage nach einem der Ansprüche 14 oder 15, **dadurch gekennzeichnet, dass** die Ausströmer Mitteldüsen und/oder Seitendüsen sind, wobei durch den Luftstrom aus zumindest einer Mitteldüse und/oder einer Seitendüse eine Klimazone klimatisierbar ist.

**17.** Klimaanlage nach einem der Ansprüche 14 bis 16, **dadurch gekennzeichnet, dass** die Ausströmer Fondausströmer sind, wobei durch den Luftstrom aus zumindest einem Fondausströmer eine Klimazone klimatisierbar ist.

**18.** Klimaanlage nach einem der vorhergehenden Ansprüche, **dadurch gekennzeichnet, dass** der Temperatursensor zumindest einer ersten Klimazone zugeordnet ist und zumindest einer zweiten Klimazone kein solcher Sensor zugeordnet ist, wobei für diese zumindest eine zweite Klimazone Oberflächentemperaturen auf der Basis von Meßwerten des Temperatursensors bestimmbar sind.

**19.** Klimaanlage nach einem der vorhergehenden Ansprüche, **dadurch gekennzeichnet, dass** die Oberflächentemperatur eines Elementes oder eines Insassen in einer Klimazone regelbar ist.

**20.** Klimaanlage nach Anspruch 19, **dadurch gekennzeichnet, dass** die Vorrichtung (10) ein Steuerelement (30) enthält zur Steuerung der Heiz- oder Kühlleistung der auf die angeströmten Fläche (24) auftreffenden Luft und das Steuerelement (30) und der Temperatursensor (26) mit einer Regeleinheit (34) verbunden sind zur Regelung der Heiz- oder Kühlleistung in Abhängigkeit des Temperatursensorsignals.

**21.** Klimaanlage nach Anspruch 20, **dadurch gekennzeichnet, dass** die Oberflächentemperatur auf einen Temperaturbereich zwischen ca. 26°C und 31°C für eine Situation mit leichter Bekleidung und zwischen ca. 18°C und 26°C für eine Situation mit warmer Bekleidung geregelt wird.

**22.** Klimaanlage nach Anspruch 21, **dadurch gekennzeichnet, dass** eine Situation mit leichter Bekleidung von einer Situation mit warmer Bekleidung anhand einer Außentemperatur erkannt und unterschieden wird.

**23.** Klimaanlage nach Anspruch 21 oder 22, **dadurch gekennzeichnet, dass** die Solloberflächentemperatur als Funktion der Außentemperatur bestimmt wird, wobei beispielsweise ein linearer Zusammenhang zwischen Solloberflächentemperatur und Außentemperatur gegeben ist, wie :

$$T\_soll\_oberfläche = T\_o + a * T\_aussen$$

mit

T_o = 20°C ... 27°C
A = 0,05 ... 0,25.

**24.** Klimaanlage nach Anspruch 23, **dadurch gekennzeichnet, dass** der Wert T_o von einem über eine Bedienung eingebbaren Wert abhängig ist.

25. Klimaanlage nach zumindest einem der Ansprüche 14 bis 18, **dadurch gekennzeichnet, daß** das Steuerelement (30) als Luftmengensteuerelement, beispielsweise als Drosselklappe (30), ausgebildet ist.

26. Klimaanlage nach einem der Ansprüche 20 bis 24, **dadurch gekennzeichnet, dass** das Steuerelement als Mischklappe für zwei unterschiedlich temperierte Luftströme ausgebildet ist.

27. Klimaanlage nach einem der Ansprüche 19 bis 26, **dadurch gekennzeichnet, dass** untemperierte Luft über einen kleinen Lüfter seitlich zu der vom Klimagerät temperierten Luft im Ausströmer zugemischt wird und dann aus dem Ausströmer ausgeblasen wird, wobei die Menge der zugemischten untemperierten Luft geregelt wird.

28. Fahrzeug mit einer Klimaanlage nach einem der vorhergehenden Ansprüche, **dadurch gekennzeichnet, daß** einem Fahrzeuginsassen wenigstens zwei Vorrichtungen (10.1, 10.2, 10.3) zugeordnet sind, die in horizontaler Ebene links und rechts vor einem Insassen angeordnet sind.

29. Fahrzeug mit einer Klimaanlage nach einem der Ansprüche 1 bis 27, **dadurch gekennzeichnet, dass** zumindest ein Temperatursensor in einer A-Säule und/oder in einer B-Säule und/oder in einer C-Säule, in der Nähe einer Ausblasdüse und/oder im Dachhimmel und/oder in einer Tür und/oder in einem Bedienelement angeordnet ist.

**Claims**

1. Air-conditioner with a device for regulating the thermal comfort in one or more air-conditioned zones of a motor vehicle, with at least one temperature sensor for the no-contact determination of a surface temperature in an air-conditioned zone and a flow outlet for the directed, jet-shaped and/or diffuse outflow of air into the said air-conditioned zone, such that the measurement area covered by the temperature sensor corresponds approximately to the air impingement area determined by the orientation of the flow outlet,
**characterised in that** the air outflow from the flow outlet is varied as a function of the degree of discomfort/comfort is the air-conditioned zone as determined from at least one surface temperature signal of the temperature sensor, in such manner that if the discomfort is substantial a jet-shaped air outflow takes place, while when close to a comfortable situation the air outflow is diffuse.

2. Air-conditioner according to Claim 1, **characterised in that** the temperature sensor is a sensor that responds to radiation, for example infrared radiation.

3. Air-conditioner according to Claim 2, **characterised in that** the temperature sensor (26) is a thermopile sensor.

4. Air-conditioner according to any of the preceding claims, **characterised in that** the temperature sensor (26) and the flow outlet (12) are combined in a single structural unit.

5. Air-conditioner according to Claim 4, **characterised in that** the flow outlet (12) comprises air guide elements (18) that determine the flow direction (22) and the temperature sensor (26) is attached on at least one of the air guide elements (18).

6. Air-conditioner according to any of the preceding claims, **characterised in that** the flow outlet (12) comprises at least one heat exchanger (70, 72) for regulating the air temperature.

7. Air-conditioner according to Claim 6, **characterised in that** the heat exchange comprises electric heating elements, such as PTC elements.

8. Air-conditioner according to any of the preceding claims, **characterised in that** the air flow emerging from the flow outlet is cone-shaped with a round, oval or other solid outflow angle and the temperature sensor covers approximately the same solid angle, which corresponds approximately to the divergence angle of the air outflow cone, or covers essentially the area whose temperature is directly regulated by the emerging air.

9. Air-conditioner according to Claim 8, **characterised in that** the aperture angle of the temperature sensor is essentially within a range of about 30° to about 120°.

10. Air-conditioner according to Claim 9, **characterised in that** the said aperture angle is 45° to 60°.

**11.** Air-conditioner according to any of Claims 8 to 10, **characterised in that** it comprises a recognition and control device by means of which a temperature gradient in the solid angle range covered can be recognised, and a flow outlet control device for the automatic adjustment of the air outflow direction towards the greatest deviation from the regulated value.

**12.** Air-conditioner according to Claim 11, **characterised in that** the temperature sensor is divided into two or more different sectors each with its own sensor element, so as to be able to determine a temperature gradient in at least one direction.

**13.** Air-conditioner according to Claims 11 or 12 in combination with Claims 6 or 7, **characterised in that** the recognition and control device also controls the power of the heat exchanger.

**14.** Air-conditioner according to any of the preceding claims, **characterised in that** at least one flow outlet is associated with each of one or more air-conditioned zones.

**15.** Air-conditioner according to Claim 14, **characterised in that** each air-conditioned zone can be acted upon directly and individually by different amounts of air and/or air temperatures.

**16.** Air-conditioner according to either of Claims 14 or 15, **characterised in that** the flow outlets are central nozzles and/or lateral nozzles, such that an air-conditioned zone can be air-conditioned by the air flow from at least one central nozzle and/or a lateral nozzle.

**17.** Air-conditioner according to any of Claims 14 to 16, **characterised in that** the flow outlets are rear outlets such that an air-conditioned zone can be air-conditioned by the air flow from at least one rear outlet.

**18.** Air-conditioner according to any of the preceding claims, **characterised in that** at least one first air-conditioned zone is associated with the temperature sensor and at least one second air-conditioned zone is not associated with any such sensor, such that for the said at least one second air-conditioned zone surface temperatures can be determined on the basis of measurement values from the temperature sensor.

**19.** Air-conditioner according to any of the preceding claims, **characterised in that** the surface temperature of an element or an occupant in an air-conditioned zone can be regulated.

**20.** Air-conditioner according to Claim 19, **characterised in that** the device (10) comprises a control element (30) for regulating the heating or cooling power of the air that impinges on the surface (24) onto which it flows, and the control element (30) and the temperature sensor (26) are connected to a regulator unit (34) for regulating the heating or cooling power as a function of the temperature sensor signal.

**21.** Air-conditioner according to Claim 20, **characterised in that** the surface temperature is adjusted to a temperature range between about 26°C and 31°C for a situation with lighter clothing and between about 18°C and 26°C for a situation with warmer clothing.

**22.** Air-conditioner according to Claim 21, **characterised in that** a situation with lighter clothing is recognised and distinguished from a situation with warmer clothing with reference to an external temperature.

**23.** Air-conditioner according to Claims 21 or 22, **characterised in that** the desired surface temperature is determined as a function of the external temperature, such that for example there is a linear relationship between the desired surface temperature and the external temperature, such as:

$$T\_soll\_oberfläche = T\_o + A * T\_aussen$$

where

$T\_o = 20°C \ldots 27°C$
$A = 0.05 \ldots 0.25.$

**24.** Air-conditioner according to Claim 23, **characterised in that** the value T_o depends on a value that can be input by an operator.

**25.** Air-conditioner according to at least one of Claims 14 to 18, **characterised in that** the control element (30) is made as an air quantity control element, for example a throttle flap (30).

**26.** Air-conditioner according to any of Claims 20 to 24, **characterised in that** the control element is made as a mixing valve for two air streams regulated to different temperatures.

**27.** Air-conditioner according to any of Claims 19 to 26, **characterised in that** air that has not been temperature-regulated is mixed in the flow outlet from the side by a small fan with the air whose temperature has been regulated by the air-conditioner and then blown out of the flow outlet, the quantity of non-temperature-regulated air mixed in being controlled.

**28.** Vehicle with an air-conditioner according to any of the preceding claims, **characterised in that** at least two devices (10.1, 10.2, 10.3) are associated with an occupant of the vehicle, which are arranged in a horizontal plane to the left and right in front of the occupant.

**29.** Vehicle with an air-conditioner according to any of Claims 1 to 27, **characterised in that** at least one temperature sensor is arranged in an A-column and/or in a B-column and/or in a C-column, close to an outflow nozzle and/or in the roof and/or in a door and/or in an operating element.

**Revendications**

**1.** Système de climatisation comprenant un dispositif de régulation du confort thermique dans une ou plusieurs zones de climatisation d'un véhicule automobile, comprenant au moins un capteur de température servant à la détection, sans contact, d'une température de surface, dans une zone de climatisation et comprenant une buse servant à l'écoulement d'air dirigé en forme de jet et / ou de façon diffuse, dans cette zone de climatisation, où la surface de mesure détectée par le capteur de température correspond à peu près à la surface d'afflux d'air prédéfinie par l'orientation de la buse, **caractérisé en ce que** l'écoulement d'air de la buse, au cours du fonctionnement, peut être modifié en fonction du degré d'inconfort / de confort, dans la zone de climatisation, qui est détecté par au moins un signal de température de surface du capteur de température, de manière telle, qu'en cas d'inconfort important, il se produise un écoulement d'air en forme de jet tandis qu'il se produit un écoulement d'air diffus lorsque l'on est proche de l'état de confort.

**2.** Système de climatisation selon la revendication 1, **caractérisé en ce que** le capteur de température est un capteur répondant à un rayonnement tel qu'un rayonnement infrarouge.

**3.** Système de climatisation selon la revendication 2, **caractérisé en ce que** le capteur de température (26) est un capteur à thermopile.

**4.** Système de climatisation selon l'une quelconque des revendications précédentes, **caractérisé en ce que** le capteur de température (26) et la buse (12) forment un ensemble unitaire.

**5.** Système de climatisation selon la revendication 4, **caractérisé en ce que** la buse (12) présente des éléments déflecteurs d'air (18) servant à donner la direction d'écoulement (22), et le capteur de température (26) est fixé sur au moins l'un des éléments déflecteurs d'air (18).

**6.** Système de climatisation selon l'une quelconque des revendications précédentes, **caractérisé en ce que** la buse (12) comprend au moins un échangeur de chaleur (70, 72) servant à tempérer l'air.

**7.** Système de climatisation selon la revendication 6, **caractérisé en ce que** l'échangeur de chaleur comprend des éléments chauffants électriques tels que des éléments à coefficient de température positif (CTP).

**8.** Système de climatisation selon l'une quelconque des revendications précédentes, **caractérisé en ce que** le flux d'air sortant de la buse est de forme conique comportant un angle solide de sortie rond, ovale ou d'une forme autre, et le capteur de température détecte approximativement le même angle solide qui correspond à peu près à l'angle d'ouverture du cône de sortie d'air, ou bien détecte sensiblement la zone de surface qui est tempérée directement par l'air sortant.

9. Système de climatisation selon la revendication 8, **caractérisé en ce que** l'angle d'ouverture du capteur de température se situe essentiellement dans une plage comprise entre à peu près 30° et à peu près 120°.

10. Système de climatisation selon la revendication 9, **caractérisé en ce que** l'angle d'ouverture est compris entre 45° et 60°.

11. Système de climatisation selon l'une quelconque des revendications 8 à 10, **caractérisé par** un dispositif de reconnaissance et de commande avec lequel un gradient de température est identifiable dans la plage détectée concernant l'angle solide, et comprenant un actionneur pour la buse, servant au réglage automatique de la direction d'écoulement d'air, en direction du plus grand écart de régulation.

12. Système de climatisation selon la revendication 11, **caractérisé en ce que** le capteur de température est subdivisé en deux secteurs différents, ou plus, comprenant à chaque fois un élément de capteur propre, pour pouvoir déterminer un gradient de température, au moins dans une direction.

13. Système de climatisation selon la revendication 11 ou 12 combinée à la revendication 6 ou 7, **caractérisé en ce que** le dispositif de reconnaissance et de commande régule également la puissance de l'échangeur de chaleur.

14. Système de climatisation selon l'une quelconque des revendications précédentes, **caractérisé en ce qu'**au moins une buse, à chaque fois, est affectée à une ou plusieurs zones de climatisation.

15. Système de climatisation selon la revendication 14, **caractérisé en ce que** chaque zone de climatisation peut être commandée directement, séparément, avec des quantités d'air et / ou des températures d'air qui sont différentes.

16. Système de climatisation selon la revendication 14 ou 15, **caractérisé en ce que** les buses sont des buses centrales et / ou des buses latérales, où une zone de climatisation peut être climatisée par le flux d'air provenant d'au moins une buse centrale et / ou d'une buse latérale.

17. Système de climatisation selon l'une quelconque des revendications 14 à 16, **caractérisé en ce que** les buses sont des buses placées à l'arrière, où une zone de climatisation peut être climatisée par le flux d'air provenant d'au moins une buse placée à l'arrière.

18. Système de climatisation selon l'une quelconque des revendications précédentes, **caractérisé en ce que** le capteur de température est affecté à au moins une première zone de climatisation et un tel capteur n'est pas affecté à au moins une deuxième zone de climatisation où, pour cette deuxième zone de climatisation au moins au nombre de un, des températures de surface peuvent être déterminées sur la base de valeurs du capteur de température ayant été mesurées.

19. Système de climatisation selon l'une quelconque des revendications précédentes, **caractérisé en ce que** la température de surface d'un élément ou d'un passager est réglable dans une zone de climatisation.

20. Système de climatisation selon la revendication 19, **caractérisé en ce que** le dispositif (10) comprend un élément de commande (30) servant à la commande de la puissance de chauffage ou de refroidissement de l'air arrivant sur la surface recevant l'afflux d'air (24), et l'élément de commande (30) et le capteur de température (26) sont raccordés à une unité de réglage (34) servant au réglage de la puissance de chauffage ou de refroidissement, en fonction du signal du capteur de température.

21. Système de climatisation selon la revendication 20, **caractérisé en ce que** la température de surface est réglée suivant une plage de température comprise entre à peu près 26°C et 31°C pour une situation avec des vêtements légers, et entre à peu près 18°C et 26°C pour une situation avec des vêtements chauds.

22. Système de climatisation selon la revendication 21, **caractérisé en ce qu'**une situation avec des vêtements légers est reconnue et différenciée d'une situation avec des vêtements chauds, à l'aide d'une température extérieure.

23. Système de climatisation selon la revendication 21 ou 22, **caractérisé en ce que** la température de surface théorique est déterminée en fonction de la température extérieure, où une relation linéaire est donnée entre une température de surface théorique, et une température extérieure, telle que :

$$T\_théorique\_surface = T\_o + a * T\_extérieure$$

avec

T_o=20°C ... 27°C
A = 0,05 ... 0,25.

24. Système de climatisation selon la revendication 23, **caractérisé en ce que** la valeur T_o est dépendante d'une valeur fournie par une commande.

25. Système de climatisation selon au moins l'une quelconque des revendications 14 à 18, **caractérisée en ce que** l'élément de commande (30) est conçu comme un élément de commande de la quantité d'air, par exemple comme un volet d'étranglement (30).

26. Système de climatisation selon l'une quelconque des revendications 20 à 24, **caractérisé en ce que** l'élément de commande est conçu comme un volet mélangeur pour deux flux d'air tempérés de façon différente.

27. Système de climatisation selon l'une quelconque des revendications 19 à 26, **caractérisé en ce que** de l'air non tempéré est mélangé dans la buse, par un petit ventilateur placé latéralement, à l'air tempéré par le climatiseur puis soufflé hors de la buse, où la quantité de l'air non tempéré et mélangé est régulée.

28. Véhicule comprenant un système de climatisation selon l'une quelconque des revendications précédentes, **caractérisé en ce qu'**au moins deux dispositifs (10.1, 10.2, 10.3) sont affectés à un passager du véhicule, dispositifs qui sont disposés dans un plan horizontal, à gauche et à droite devant un passager.

29. Véhicule comprenant un système de climatisation selon l'une quelconque des revendications 1 à 27, **caractérisé en ce qu'**au moins un capteur de température est disposé dans une colonne A et / ou dans une colonne B et / ou dans une colonne C, à proximité d'une buse de sortie et / ou dans la garniture intérieure du pavillon et / ou dans une porte et / ou dans un élément de commande.

**Fig. 1**

Frischluft/
Umluft

**Fig. 2**

Fig. 3

EP 1 236 593 B1

Fig. 4

EP 1 236 593 B1

Fig. 5

Fig. 6

Fig. 7

EP 1 236 593 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0987133 A2
- GB 2344647 A